# EUROPEAN PATENT SPECIFICATION

(11) **EP 3 296 582 B1**
(45) Date of publication and mention of the grant of the patent: **28.10.2020**
(21) Application number: 16814248.7
(22) Date of filing: 16.06.2016
(51) Int. Cl.: F16C 33/20, B60N 2/16, B60N 2/90, F16C 33/08, B60N 2/18

(54) **SLIDING BEARING**
GLEITLAGER
PALIER À CONTACT LISSE

(30) Priority: 23.06.2015 JP 2015125755
(43) Date of publication of application: 21.03.2018
(73) Proprietor: Oiles Corporation, Tokyo 108-0075 (JP)
(72) Inventor: SUGIYAMA, Masanori, Fujisawa-shi Kanagawa 252-0811 (JP); YAMAMOTO, Makoto, Rittou-shi Shiga 520-3041 (JP); SHIRAISHI, Yuki, Toyota-shi Aichi 471-0842 (JP); WATANABE, Kanami, Fujisawa-shi Kanagawa 252-0811 (JP)
(74) Representative: Schlief, Thomas P.
(86) International application number: PCT/JP2016/067871
(87) International publication number: WO 2016/208477

(56) References cited:
- JP-A- S58 180 838
- JP-A- S58 180 838
- JP-A- 2004 011 898
- JP-A- 2004 011 898
- JP-A- 2006 160 217
- JP-A- 2006 160 217
- JP-A- 2010 151 203
- JP-U- S5 999 820
- JP-U- S5 999 820
- US-A- 4 289 077

## Description

### TECHNICAL FIELD

The present invention relates to a sliding bearing that supports a frame and a frame rotation shaft rotatably with respect to each other by fitting and fixing a bearing outer peripheral surface-side part to the frame and fitting and press-fitting the frame rotation shaft into a bearing inner peripheral surface-side part. In particular, the present invention relates to an automobile seat frame sliding bearing.

### BACKGROUND ART

Conventionally, as an automobile sliding bearing, there is a known sliding bearing in which a bearing alloy layer is provided on a back metal, a large number of annular grooves extending in the circumferential direction are formed in the axial direction on an inner peripheral surface of this bearing alloy layer, and a portion between the annular grooves adjacent to each other in the axial direction is a mounting portion extending in the circumferential direction (for example, Patent Literature 1).

Patent literature 2 discloses a sliding bearing wherein a bearing inner peripheral surface is formed by a resin layer, and the bearing inner peripheral surface has a projected and recessed shape including a projected contact portion to be brought into contact with a shaft, and a recessed non-contact portion to be not brought into contact with the shaft but to form a clearance.

### CITATION LIST

### Patent Literature

Patent Literature 1: JP 2795306B (in particular, see [0006] and Fig. 1)
Patent Literature 2: JP S59 99820 U

### SUMMARY OF INVENTION

### Technical Problem

For example, in a case where the sliding bearing is used in a seat frame of an automobile seat, there is a problem in which pressing force against a frame rotation shaft fitted and press-fitted into an inner periphery is excessive and hence friction resistance at the time of rotating the frame rotation shaft fitted and press-fitted into the inner periphery for adjusting a position and a posture of the seat becomes excessive, and a problem in which due to plastic deformation of the mounting portion, a gap is generated between the mounting portion and the frame rotation shaft and hence looseness is generated in the automobile seat.

The present invention is to address the aforementioned problems of the prior art. That is, an object of the present invention is to provide a sliding bearing in which generation of looseness is avoided in a frame and friction resistance between the sliding bearing and a frame rotation shaft is decreased to reduce a power load at the time of adjusting a relative position and a posture by a motor or a manual operation.

### Solution to Problem

In order to address the above-described problems, the present invention provides a sliding bearing including a bearing outer peripheral surface and a bearing inner peripheral surface, the sliding bearing that supports a frame and a frame rotation shaft rotatably with respect to each other by fitting and fixing a bearing outer peripheral surface-side part to the frame and fitting and press-fitting the frame rotation shaft into a bearing inner peripheral surface-side part, wherein at least the bearing inner peripheral surface among the bearing outer peripheral surface and the bearing inner peripheral surface is formed by a resin layer, and the bearing inner peripheral surface has a projected and recessed shape including a projected contact portion to be brought into contact with the frame rotation shaft, and a recessed non-contact portion to be not brought into contact with the frame rotation shaft but to form a clearance.

The present invention further addresses the above-described problems by providing the sliding bearing wherein the recessed non-contact portion is formed in a conical/pyramid shape or a spherical shape toward the bearing outer peripheral surface.

The "conical/pyramid shape" includes not only a conical/pyramid body having a tip but also a truncated conical/pyramid body formed by cutting out the tip.

Another aspect of the present invention further addresses the above-described problems by providing the sliding bearing according to the first aspect of the present invention, wherein the recessed non-contact portion is formed in a quadrangular pyramid shape toward the bearing outer peripheral surface. The "quadrangular pyramid shape" includes not only a quadrangular pyramid having a tip but also a truncated quadrangular pyramid formed by cutting out the tip.

A fourth aspect of the present invention further addresses the above-described problems by providing the sliding bearing according to any one of the first to third aspects of the present invention, wherein arrangement of the projected contact portion and the recessed non-contact portion of the bearing inner peripheral surface forms a grid pattern.

A fifth aspect of the present invention further addresses the above-described problems by providing the sliding bearing according to the fourth aspect of the present invention, wherein the grid pattern is formed by arranging plural diamond shapes having imaginary diagonal lines which are orthogonal to each other, and one of the imaginary diagonal lines which are orthogonal to each other of the diamond shapes is directed in the same direction as the rotation shaft direction of the frame rotation shaft.

A sixth aspect of the present invention further addresses the above-described problems by providing the sliding bearing according to any one of the first to fifth aspects of the present invention, wherein the bearing outer peripheral surface is formed by a metal plate, and wherein the resin layer is laminated on the metal plate via a bronze sintered layer with which part of the resin layer is impregnated.

A seventh aspect of the present invention further addresses the above-described problems by providing the sliding bearing according to any one of the first to sixth aspects of the present invention, wherein the frame is a seat frame of an automobile seat, wherein the frame rotation shaft is a frame rotation shaft of the automobile seat, and wherein the seat frame of the automobile seat and the frame rotation shaft are supported rotatably with respect to each other by fitting and fixing the bearing outer peripheral surface-side part to the seat frame of the automobile seat, and fitting and press-fitting the frame rotation shaft into the bearing inner peripheral surface-side part.

### Advantageous Effects of Invention

The sliding bearing of the present invention includes the bearing outer peripheral surface and the bearing inner peripheral surface, and is capable of not only supporting the frame and the frame rotation shaft rotatably with respect to each other by fitting and fixing the bearing outer peripheral surface-side part to the frame and fitting and press-fitting the frame rotation shaft into the bearing inner peripheral surface-side part, but also exerting the following specific effects.

According to the sliding bearing of the present invention, the bearing outer peripheral surface-side part is fitted and fixed to the frame, the frame rotation shaft is fitted and press-fitted into the bearing inner peripheral surface-side part, and the bearing inner peripheral surface formed by the resin layer includes the projected contact portion to be brought into contact with the frame rotation shaft. Thereby, the projected contact portion is brought into contact with the frame rotation shaft without any gap. Thus, generation of looseness and uneven wear which are often caused in the frame can be suppressed.

Further, the bearing inner peripheral surface formed by the resin layer has the projected and recessed shape including the projected contact portion to be brought into contact with the frame rotation shaft, and the recessed non-contact portion to be not brought into contact with the frame rotation shaft but to form a clearance. Thereby, the projected contact portion of the resin layer forming the bearing inner peripheral surface gets more easily deformed to the side of the recessed non-contact portion, and the recessed non-contact portion of the resin layer forming the bearing inner peripheral surface decreases a contact area with the frame rotation shaft to decrease friction resistance. Thus, a power load of a motor or a manual operation required for adjusting a relative position and a posture can also be reduced.

According to the sliding bearing of the present invention, in addition to the effect exerted by the invention according to the first aspect, the recessed non-contact portion is formed in a conical/pyramid shape or a spherical shape toward the bearing outer peripheral surface. Thereby, the projected contact portion gets more easily deformed by pressing force acting between the frame rotation shaft and the sliding bearing. Thus, a deformation amount of the projected contact portion is adjusted to some extent, so that the generation of the looseness can be avoided and the friction resistance can be decreased at the same time.

According to the sliding bearing of the third aspect of the present invention, in addition to the effect exerted by the invention according to the first aspect, the recessed non-contact portion is formed in a quadrangular pyramid shape toward the bearing outer peripheral surface. Thereby, the same effect as the second aspect of the present invention can be obtained.

According to the sliding bearing of the fourth aspect of the present invention, in addition to the effect exerted by the invention according to any one of the first to third aspects, the arrangement of the projected contact portion and the recessed non-contact portion of the bearing inner peripheral surface forms a grid pattern. Thereby, the projected contact portion gets more easily deformed by the pressing force acting between the frame rotation shaft and the sliding bearing over the entire bearing inner peripheral surface. Thus, the deformation amount of the projected contact portion is adjusted to some extent over the entire bearing inner peripheral surface, so that the generation of the looseness can be avoided and the friction resistance can be decreased at the same time.

According to the sliding bearing of the fifth aspect of the present invention, in addition to the effect exerted by the invention according to the fourth aspect, one of the imaginary diagonal lines which are orthogonal to each other of the diamond shapes forming the grid pattern is directed in the same direction as the rotation shaft direction of the frame rotation shaft. Thereby, the projected contact portion is deformed not only in the rotation shaft direction but also in the rotation direction. In comparison to a case where the projected contact portion is deformed only in the rotation shaft direction, the pressing force acting between the frame rotation shaft and the sliding bearing is reduced. Thus, the friction resistance between the sliding bearing and the frame rotation shaft can be furthermore decreased.

According to the sliding bearing of the sixth aspect of the present invention, in addition to the effect exerted by the invention according to any one of the first to fifth aspects, the bearing outer peripheral surface is formed by the metal plate, and the resin layer is laminated on the metal plate via the bronze sintered layer with which part of the resin layer is impregnated. Thereby, the resin layer gets less easily removed. Thus, the generation of the looseness can be suppressed for a long time, and the power load of the motor or the manual operation required for adjusting the relative position and the posture can also be reduced.

According to the sliding bearing of the seventh aspect of the present invention, in addition to the effect exerted by the invention according to any one of the first to sixth aspects, the frame is the seat frame of the automobile seat, the frame rotation shaft is the frame rotation shaft of the automobile seat, and the seat frame of the automobile seat and the frame rotation shaft are supported rotatably with respect to each other by fitting and fixing the bearing outer peripheral surface-side part to the seat frame of the automobile seat, and fitting and press-fitting the frame rotation shaft into the bearing inner peripheral surface-side part. Thereby, the generation of the looseness and the uneven wear which are often caused in the automobile seat can be suppressed.

Further, the power load of the motor or the manual operation required for adjusting the position and the posture of the automobile seat can be reduced.

### BRIEF DESCRIPTION OF DRAWINGS

- **Fig. 1**: is a schematic side view showing an automobile seat having multi-layer sliding bearings according to an embodiment of the present invention.
- **Fig. 2A**: is a plan view of the multi-layer sliding bearing according to the embodiment of the present invention.
- **Fig. 2B**: is a side view seen from the reference numeral 2B shown in Fig. 2A.
- **Fig. 3A**: is an enlarged schematic view of a projected and recessed shape of an inner peripheral surface seen from the reference numeral 3A shown in Fig. 2A.
- **Fig. 3B**: is a schematic sectional view seen by the line of the reference numerals 3B-3B shown in Fig. 3A.
- **Fig. 4A**: is a schematic view of a state where a load does not act from a frame rotation shaft.
- **Fig. 4B**: is a schematic view of a state where a load acts downward in the vertical direction from the frame rotation shaft.

### DESCRIPTION OF EMBODIMENTS

Any specific embodiment of the present invention may be applicable, as long as a thrust sliding bearing of the present invention including a sliding bearing includes a bearing outer peripheral surface and a bearing inner peripheral surface, the sliding bearing that supports a frame and a frame rotation shaft rotatably with respect to each other by fitting and fixing a bearing outer peripheral surface-side part to the frame and fitting and press-fitting the frame rotation shaft into a bearing inner peripheral surface-side part, wherein at least the bearing inner peripheral surface among the bearing outer peripheral surface and the bearing inner peripheral surface is formed by a resin layer, and the bearing inner peripheral surface has a projected and recessed shape including a projected contact portion to be brought into contact with the frame rotation shaft, and a recessed non-contact portion to be not brought into contact with the frame rotation shaft but to form a clearance, generation of looseness is avoided in the frame and friction resistance between the sliding bearing and the frame rotation shaft is decreased to reduce a power load at the time of adjusting a relative position and a posture by a motor or a manual operation.

For example, as long as the sliding bearing has the resin layer forming at least the bearing inner peripheral surface, the bearing outer peripheral surface-side part is fitted and fixed to the frame, and the frame rotation shaft is fitted and press-fitted into the bearing inner peripheral surface-side part, the sliding bearing may have a flange portion or may have no flange portion.

As a material of the resin layer, polytetrafluoroethylene resin is used. However, any synthetic resin that facilitates sliding of the metal frame rotation shaft, for example, polytetrafluoroethylene resin containing filler such as polyimide resin, polyacetal resin, or oil-containing polyacetal resin containing a lubricating oil agent, may be used.

Further, for example, in a case where the sliding bearing is a multi-layer sliding bearing having a resin layer and a metal plate, a material of the metal plate is preferably a metal plate made of a stainless steel sheet (SUS), a cold-rolled steel sheet (SPCC), an electrogalvanized steel sheet (SECC), a brass sheet, or an aluminum sheet. However, the present invention is not limited to these but the metal plate may be made of other metals.

### Embodiment

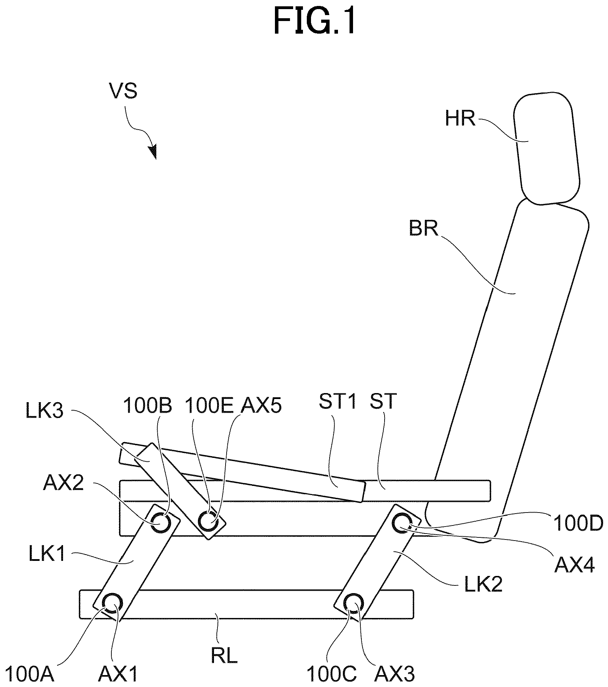

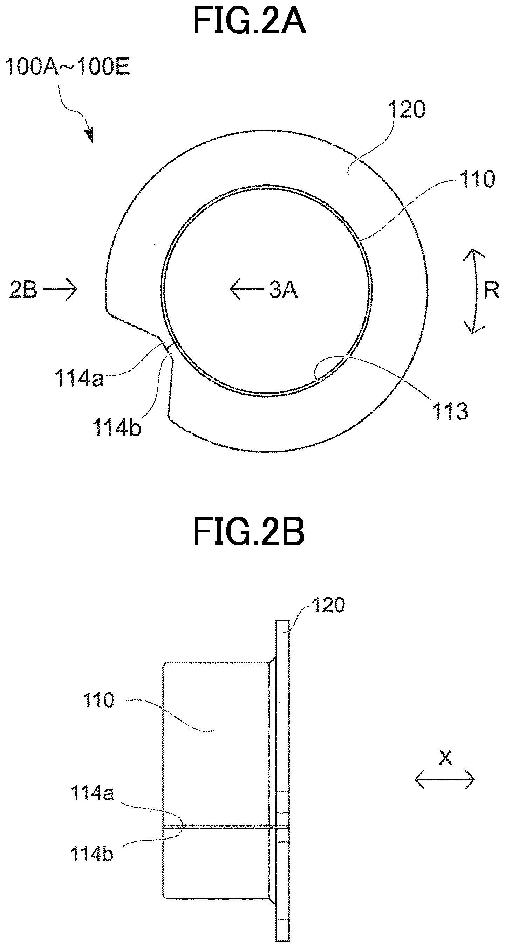

Hereinafter, an automobile seat VS having multi-layer sliding bearings 100Ato 100E serving as one example of a sliding bearing which is an embodiment of the present invention will be described on the basis of Fig. 1, and the multi-layer sliding bearings 100A to 100E will be described on the basis of Figs. 2A to 4B.

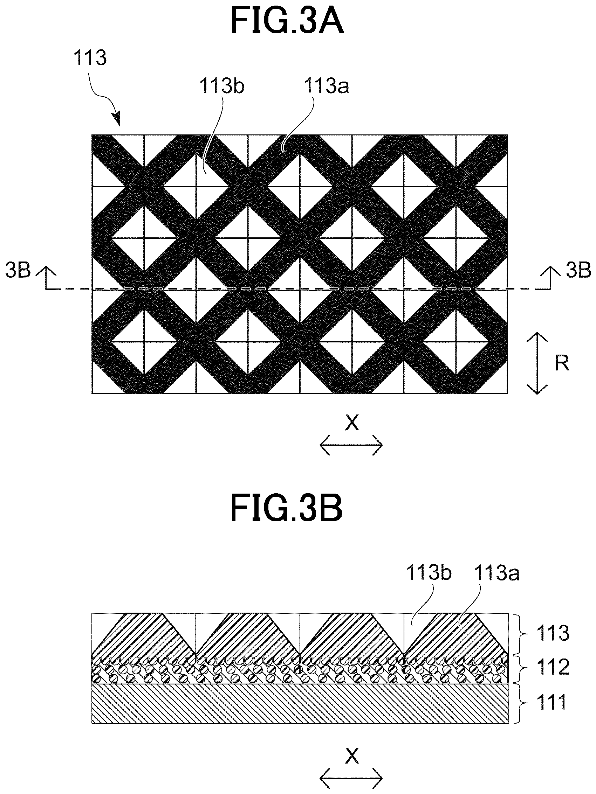

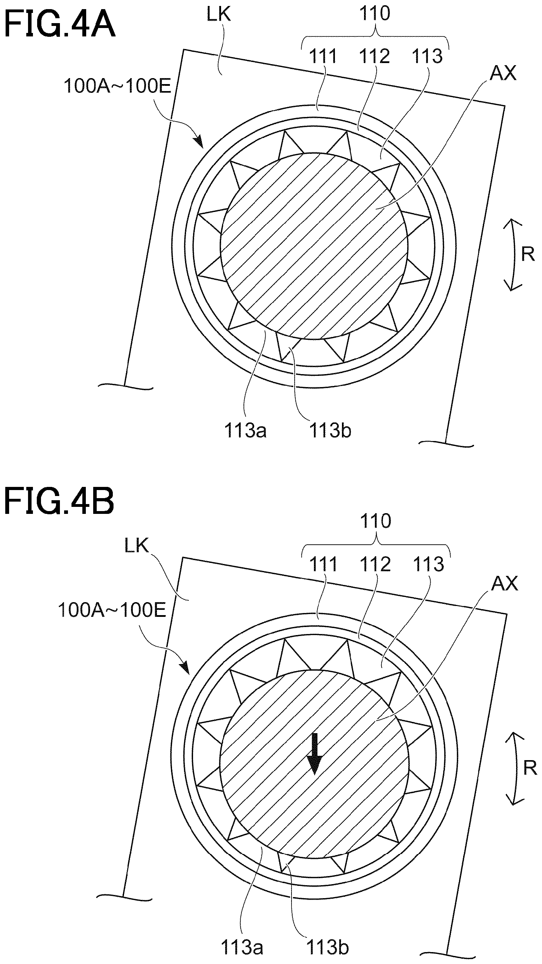

Fig. 1 is a schematic side view showing the automobile seat having the multi-layer sliding bearings according to the embodiment of the present invention. Fig. 2A is a plan view of the multi-layer sliding bearing according to the embodiment of the present invention. Fig. 2B is a side view seen from the reference numeral 2B shown in Fig. 2A. Fig. 3A is an enlarged schematic view of a projected and recessed shape of an inner peripheral surface seen from the reference numeral 3A shown in Fig. 2A. Fig. 3B is a schematic sectional view seen by the line of the reference numerals 3B-3B shown in Fig. 3A. Fig. 4A is a schematic view of a state where a load does not act from a frame rotation shaft. Fig. 4B is a schematic view of a state where a load acts downward in the vertical direction from the frame rotation shaft.

As shown in Fig. 1, the automobile seat VS according to the embodiment of the present invention includes an attachment rail RL, a front link LK1 serving as a seat frame LK which is one example of a frame installed on both the sides of the seat, a rear link LK2 similarly serving as the seat frame LK, a seating portion inclination adjustment link LK3 similarly serving as the seat frame LK, an attachment rail front frame rotation shaft AX1 serving as a metal frame rotation shaft AX to be fitted and press-fitted into an inner periphery of the multi-layer sliding bearing 100A which is fitted and fixed to the seat frame LK, a seating portion front frame rotation shaft AX2 similarly serving as the frame rotation shaft AX to be fitted and press-fitted into an inner periphery of the multi-layer sliding bearing 100B, an attachment rail rear frame rotation shaft AX3 similarly serving as the frame rotation shaft AX to be fitted and press-fitted into an inner periphery of the multi-layer sliding bearing 100C, a seating portion rear frame rotation shaft AX4 similarly serving as the frame rotation shaft AX to be fitted and press-fitted into an inner periphery of the multi-layer sliding bearing 100D, a seating portion middle-front frame rotation shaft AX5 similarly serving as the frame rotation shaft AX to be fitted and press-fitted into an inner periphery of the multi-layer sliding bearing 100E, a seating portion ST, a backrest portion BR, and a headrest portion HR.

Among these members, the attachment rail RL is attached to a chassis of an automobile (not shown).

The front link LK1 is installed in a front side part of the automobile seat VS, and couples the attachment rail RL and the seating portion ST in the front side part.

The multi-layer sliding bearings 100A, 100B are fitted and fixed to both end parts of the front link LK1, the attachment rail front frame rotation shaft AX1 installed in a front side part of the attachment rail is press-fitted into the multi-layer sliding bearing 100A in one end part of the front link LK1, and the seating portion front frame rotation shaft AX2 installed in a front side part of the seating portion is press-fitted into the multi-layer sliding bearing 100B in the other end part of the front link LK1.

The rear link LK2 is installed in a rear side part of the automobile seat VS, and couples the attachment rail RL and the seating portion ST in the rear side part.

As well as the front link LK1, the multi-layer sliding bearings 100C, 100D are fitted and fixed to both end parts of the rear link LK2, the attachment rail rear frame rotation shaft AX3 installed in a rear side part of the attachment rail is press-fitted into the multi-layer sliding bearing 100C in one end part of the rear link LK2, and the seating portion rear frame rotation shaft AX4 installed in a rear side part of the seating portion is press-fitted into the multi-layer sliding bearing 100D in the other end part of the rear link LK2.

The seating portion inclination adjustment link LK3 is installed in the front side part of the automobile seat VS, couples a seating portion front side part ST1 and the seating portion ST of a main body, and is capable of freely adjusting inclination of the seating portion front side part ST1.

As well as the front link LK1, the multi-layer sliding bearing 100E is fitted and fixed to one end part of the seating portion inclination adjustment link LK3, and the seating portion middle-front frame rotation shaft AX5 installed in a middle-front side part of the seating portion is press-fitted into the multi-layer sliding bearing 100E in one end part of the seating portion inclination adjustment link LK3.

The other end part of the seating portion inclination adjustment link LK3 is, for example, rotatably and slidably coupled to a swinging end side part of the seating portion front side part ST1.

The backrest portion BR is installed in the rear side part of the seating portion rotatably, that is, in a reclinable manner with respect to the seating portion ST.

The headrest portion HR is installed on the upper side of the seating portion.

Although details are not shown, at least the front link LK1, the rear link LK2, and the seating portion inclination adjustment link LK3 respectively swing by an operation of a user with power of a motor serving as one example, so that positions and postures of portions of the seat are adjusted.

Successively, the multi-layer sliding bearings 100A to 100E will be described.

Relationships between the multi-layer sliding bearings 100Ato 100E, the seat frame LK (LK1 to LK3), and the frame rotation shaft AX (AX1 to AX5) are common to each other. Thus, the following description will be given simply with the seat frame LK and the frame rotation shaft AX.

As shown in Figs. 2A to 4B, each of the multi-layer sliding bearings 100A to 100E includes a cylindrical portion 110 and a flange portion 120. Among the portions, at least the cylindrical portion 110 has a metal plate 111 forming a bearing outer peripheral surface, a resin layer 113 serving as a sliding layer which forms a bearing inner peripheral surface, and a porous bronze sintered layer 112 formed between the metal plate 111 and the resin layer 113, the bronze sintered layer with which part of the resin layer 113 is impregnated.

In the present embodiment, the bearing inner peripheral surface formed by the resin layer 113 has a projected and recessed shape including grid-pattern projected contact portions 113a to be brought into contact with the frame rotation shaft AX, and plural recessed non-contact portions 113b to be not brought into contact with the frame rotation shaft AX but to form clearances between the projected contact portions 113a.

Thereby, the projected contact portions 113a are brought into contact with the frame rotation shaft AX without any gap.

That is, generation of looseness and uneven wear which are often caused in the front link LK1, the rear link LK2, and the seating portion inclination adjustment link LK3 serving as the seat frame LK of the automobile seat VS are suppressed.

Further, the projected contact portions 113a of the resin layer 113 forming the bearing inner peripheral surface get more easily deformed to the side of the recessed non-contact portions, and the recessed non-contact portions 113b of the resin layer 113 forming the bearing inner peripheral surface decrease a contact area with the frame rotation shaft AX to decrease the friction resistance.

That is, the power load of the motor or the manual operation required for adjusting the position and the posture of the automobile seat is reduced.

Each of the multi-layer sliding bearings 100A to 100E of the present embodiment is a so-called wrapped bush formed by rolling a strip-shaped multi-layer plate including the metal plate 111, the resin layer 113, and the bronze sintered layer 112 in a cylindrical shape. Thus, the cylindrical portion 110 is formed by butting butting ends 114a, 114b with each other.

The projected and recessed shape including the projected contact portions 113a and the recessed non-contact portions 113b is formed by pressing of a roller, etc. in a state before rolled in a cylindrical shape.

In the present embodiment, the projected contact portions 113a are elastically deformed by press-fitting of the frame rotation shaft AX.

In the present embodiment, the bearing inner peripheral surface formed by the resin layer 113 has a grid pattern including the projected contact portions 113a and the recessed non-contact portions 113b.

Further, each of the recessed non-contact portions 113b is formed in a reversed quadrangular pyramid shape spreading toward the frame rotation shaft AX.

That is, the recessed non-contact portion 113b is formed in a quadrangular pyramid shape toward the bearing outer peripheral surface.

Thereby, when the projected contact portion 113a is deformed by pressing force acting between the frame rotation shaft AX and the sliding bearing, the direction in which the projected contact portion 113a is deformed becomes the side of the recessed non-contact portion nearby.

That is, a deformation amount of the projected contact portion 113a is adjusted to some extent, so that generation of the looseness is avoided and the friction resistance is decreased at the same time.

In the present embodiment, the recessed non-contact portion 113b is formed in a reversed quadrangular pyramid shape. However, the projected contact portion 113a may be formed in a quadrangular pyramid shape to make the grid pattern including the projected contact portions 113a and the recessed non-contact portions 113b an opposite pattern to the configuration of Fig. 3A.

As long as some of the projected contact portions 113a are elastically deformed regarding a projected shape of the projected contact portions 113a described above, the projected and recessed shape may be not a quadrangular pyramid shape but other shapes such as a spherical shape, a semi-spherical shape, a triangular pyramid shape, a conical shape, a cylindrical shape, and a columnar shape (for example, a triangular column, a square column, and a polygonal column).

Further, in the present embodiment, one of imaginary diagonal lines which are orthogonal to each other of diamond shapes forming the grid pattern is directed in the same direction as the rotation shaft direction X of the frame rotation shaft AX.

Thereby, the projected contact portions 113a are deformed not only in the rotation shaft direction X but also in the rotation direction R. In comparison to a case where the projected contact portions are deformed only in the rotation shaft direction X, the pressing force acting between the frame rotation shaft AX and the sliding bearing is reduced.

As described above, the resin layer 113 is laminated on the metal plate 111 via the bronze sintered layer 112 with which part of the resin layer 113 is impregnated.

Thereby, the resin layer 113 gets less easily removed.

Some of the projected contact portions 113a are elastically deformed. Thus, in a case where from a state of the frame rotation shaft AX being simply fitted and press-fitted into any of the multi-layer sliding bearings 100A to 100E as shown in Fig. 4A, a load applied downward in the vertical direction from the frame rotation shaft AX by the user seating on the automobile seat VS, the load acts on any of the multi-layer sliding bearings 100A to 100E as shown in Fig. 4B, the projected contact portions 113a on the lower side are more greatly elastically deformed. However, elastic deformation of the projected contact portions 113a on the other upper side are reduced, that is, the projected contact portions are going to get back to the state before the elastic deformation. Thus, no gap is generated between the projected contact portions 113a on the upper side and the frame rotation shaft AX.

That is, even in a case where the load acts disproportionately in the specific radial direction with respect to the frame rotation shaft AX, no looseness is generated in the front link LK1, the rear link LK2, and the seating portion inclination adjustment link LK3 serving as the seat frame LK of the automobile seat VS.

Even in a case where the load acts in a different direction of a front, rear, left, or right part of the seat due to movement of the automobile, no looseness is generated in the front link LK1, the rear link LK2, and the seating portion inclination adjustment link LK3 serving as the seat frame LK of the automobile seat VS.

The multi-layer sliding bearings 100A to 100E are described to be used for the automobile seat frame. However, the multi-layer sliding bearings 100A to 100E may be used for, for example, doors of the automobile and hinge points of a trunk door other than the automobile seat, or may further be used for hinge points of not the automobile but others.

In the multi-layer sliding bearings 100A to 100E serving as the sliding bearing according to the embodiment of the present invention obtained in such a way, the bearing outer peripheral surface-side parts are, as one example of the frame, respectively fitted and fixed to the front link LK1, the rear link LK2, and the seating portion inclination adjustment link LK3 serving as the seat frame LK of the automobile seat VS which is one example of the frame, the frame rotation shaft AX (AX1 to AX5) of the automobile seat VS is fitted and press-fitted into the bearing inner peripheral surface-side part, and the bearing inner peripheral surface formed by the resin layer 113 has the projected and recessed shape including the plural projected contact portions 113a to be brought into contact with the frame rotation shaft AX (AX1 to AX5), and the plural recessed non-contact portions 113b to be not brought into contact with the frame rotation shaft AX (AX1 to AX5) but to form clearances between the projected contact portions 113a. Thereby, the generation of the looseness can be avoided in the front link LK1, the rear link LK2, and the seating portion inclination adjustment link LK3 serving as the seat frame LK of the automobile seat VS, and the friction resistance between the multi-layer sliding bearings 100A to 100E and the frame rotation shaft AX (AX1 to AX5) can be decreased to reduce the power load at the time of adjusting the position and the posture of the automobile seat by the motor or the manual operation.

The bearing inner peripheral surface formed by the resin layer 113 has the grid pattern including the projected contact portions 113a and the recessed non-contact portions 113b, and each of the recessed non-contact portions 113b is formed in a reversed quadrangular pyramid shape spreading toward the frame rotation shaft AX (AX1 to AX5). Thereby, the deformation amount of the projected contact portions 113a is adjusted to some extent, so that the generation of the looseness can be avoided and the friction resistance can be decreased at the same time.

Further, one of the imaginary diagonal lines which are orthogonal to each other of the diamond shapes forming the grid pattern is directed in the same direction as the rotation shaft direction X of the frame rotation shaft AX (AX1 to AX5). Thereby, the friction resistance between the multi-layer sliding bearings 100A to 100E and the frame rotation shaft AX (AX1 to AX5) can be furthermore decreased.

The resin layer 113 is laminated on the metal plate 111 via the bronze sintered layer 112 with which part of the resin layer 113 is impregnated. Thereby, the generation of the looseness can be suppressed for a long time, and the power load of the motor or the manual operation required for adjusting the position and the posture of the automobile seat can also be reduced. The effects thereof are remarkable.

### EXPLANATION OF REFERENCE NUMERALS

- 100A to 100E: multi-layer sliding bearing
- 110: cylindrical portion
- 111: metal plate
- 112: bronze sintered layer
- 113: resin layer (sliding layer)
- 113a: projected contact portion
- 113b: recessed non-contact portion
- 114a: butting end
- 114b: butting end
- 120: flange portion
- VS: automobile seat
- RL: attachment rail
- LK: seat frame
- LK1: front link
- LK2: rear link
- LK3: seating portion inclination adjustment link
- AX: frame rotation shaft
- AX1: attachment rail front frame rotation shaft
- AX2: seating portion front frame rotation shaft
- AX3: attachment rail rear frame rotation shaft
- AX4: seating portion rear frame rotation shaft
- AX5: seating portion middle-front frame rotation shaft
- ST: seating portion
- ST1: seating portion front side part
- BR: backrest portion
- HR: headrest portion
- X: rotation shaft direction
- R: rotation direction

## Claims

1. A sliding bearing (100A to 100E) comprising:
a bearing outer peripheral surface and a bearing inner peripheral surface,
the sliding bearing (100A to 100E) being configured for supporting a frame (LK) and a frame rotation shaft (AX) rotatably with respect to each other by fitting and fixing a bearing outer peripheral surface-side part to the frame (LK) and fitting and press-fitting the frame rotation shaft (AX) into a bearing inner peripheral surface-side part,
wherein at least the bearing inner peripheral surface among the bearing outer peripheral surface and the bearing inner peripheral surface is formed by a resin layer (113), and the bearing inner peripheral surface has a projected and recessed shape including a projected contact portion (113a) to be brought into contact with the frame rotation shaft (AX), and a recessed non-contact portion (113b) to be not brought into contact with the frame rotation shaft (AX) but to form a clearance,
**characterized in that** the recessed non-contact portion (113b) is formed in a conical or pyramid shape toward the bearing outer peripheral surface.

2. The sliding bearing (100A to 100E) according to claim 1, wherein the recessed non-contact portion (113b) is formed in a quadrangular pyramid shape toward the bearing outer peripheral surface.

3. The sliding bearing (100A to 100E) according to any one of claims 1 to 2, wherein arrangement of the projected contact portion (113a) and the recessed non-contact portion (113b) of the bearing inner peripheral surface forms a grid pattern.

4. The sliding bearing (100A to 100E) according to claim 3, wherein the grid pattern is formed by arranging plural diamond shapes having imaginary diagonal lines which are orthogonal to each other, and one of the imaginary diagonal lines which are orthogonal to each other of the diamond shapes is directed in the same direction as the rotation shaft direction (X) of the frame rotation shaft (AX).

5. The sliding bearing (100A to 100E) according to any one of claims 1 to 4, wherein the
bearing outer peripheral surface is formed by a metal plate, and
wherein the resin layer (113) is laminated on the metal plate via a bronze sintered layer with which part of the resin layer (113) is impregnated.

6. A seat frame (LK) of an automobile seat (VS) comprising a sliding bearing (100A to 100E) according to any one of claims 1 to 5,
wherein the frame rotation shaft (AX) is a frame rotation shaft (AX) of the automobile seat (VS), and
wherein the seat frame (LK) of the automobile seat (VS) and the frame rotation shaft (AX) are supported rotatably with respect to each other by fitting and fixing the bearing outer peripheral surface-side part to the seat frame (LK) of the automobile seat (VS), and fitting and press-fitting the frame rotation shaft (AX) into the bearing inner peripheral surface-side part.

## Patentansprüche

1. Gleitlager (100A bis 100E), umfassend:
eine Lageraußenumfangsfläche und eine Lagerinnenumfangsfläche,
wobei das Gleitlager (100A bis 100E) ausgelegt ist, einen Rahmen (LK) und eine Rahmendrehwelle (AX) zu tragen, die bezüglich einander drehbar sind, durch ein Aufpassen und Befestigen eines lageraußenumfangsflächenseitigen Teils am Rahmen (LK) und ein Einpassen und Presspassen der Rahmendrehwelle (AX) in einen lagerinnenumfangsflächenseitigen Teil,
wobei mindestens die Lagerinnenumfangsfläche unter der Lageraußenumfangsfläche und der Lagerinnenumfangsfläche durch eine Harzschicht (113) gebildet ist und die Lagerinnenumfangsfläche eine vorspringende und vertiefte Form aufweist, die einen vorspringenden Kontaktteil (113a), der in Kontakt mit der Rahmendrehwelle (AX) zu bringen ist, und einen vertieften Nicht-Kontaktteil (113b) enthält, der nicht in Kontakt mit der Rahmendrehwelle (AX) zu bringen ist, sondern einen Abstand bilden soll,
**dadurch gekennzeichnet, dass** der vertiefte Nicht-Kontaktteil (113b) zu einer konischen oder pyramidalen Form zur Lageraußenumfangsfläche hin ausgebildet ist.

2. Gleitlager (100A bis 100E) nach Anspruch 1, wobei der vertiefte Nicht-Kontaktteil (113b) zu einer viereckigen pyramidalen Form zur Lageraußenumfangsfläche hin ausgebildet ist.

3. Gleitlager (100A bis 100E) nach einem beliebigen der Ansprüche 1 bis 2, wobei die Anordnung des vorspringenden Kontaktteils (113a) und des vertieften Nicht-Kontaktteils (113b) der Lagerinnenumfangsfläche ein Gittermuster bildet.

4. Gleitlager (100A bis 100E) nach Anspruch 3, wobei das Gittermuster durch ein Anordnen mehrerer Rhombenformen mit imaginären diagonalen Linien, die rechtwinklig zueinander sind, gebildet ist, und eine der imaginären diagonalen Linien, die rechtwinklig zueinander sind, der Rhombenformen in dieselbe Richtung gerichtet ist wie die Drehwellenrichtung (X) der Rahmendrehwelle (AX).

5. Gleitlager (100A bis 100E) nach einem beliebigen der Ansprüche 1 bis 4,
wobei die Lageraußenumfangsfläche durch eine Metallplatte gebildet ist, und
wobei die Harzschicht (113) auf die Metallplatte mittels einer Sinterbronzeschicht laminiert ist, mit der ein Teil der Harzschicht (113) imprägniert ist.

6. Sitzrahmen (LK) eines Automobilsitzes (VS), umfassend ein Gleitlager (100A bis 100E) nach einem beliebigen der Ansprüche 1 bis 5,
wobei die Rahmendrehwelle (AX) eine Rahmendrehwelle (AX) des Automobilsitzes (VS) ist, und
wobei der Sitzrahmen (LK) des Automobilsitzes (VS) und die Rahmendrehwelle (AX) drehbar bezüglich einander getragen sind durch ein Aufpassen und Befestigen des lageraußenumfangsflächenseitigen Teils am Sitzrahmen (LK) des Automobilsitzes (VS) und ein Einpassen und Presspassen der Rahmendrehwelle (AX) in den lagerinnenumfangsflächenseitigen Teil.

## Revendications

1. Palier lisse (100A à 100E) comprenant :
une surface périphérique extérieure de palier et une surface périphérique intérieure de palier,
le palier lisse (100A à 100E) étant configuré pour supporter un cadre (LK) et un arbre de rotation de cadre (AX) de manière rotative l'un par rapport à l'autre par ajustage et fixation d'une partie latérale de surface périphérique extérieure de palier sur le cadre (LK) et par ajustage et emmanchement à force de l'arbre de rotation de cadre (AX) dans une partie latérale de surface périphérique intérieure de palier,
dans lequel au moins la surface périphérique intérieure de palier parmi la surface périphérique extérieure de palier et la surface périphérique intérieure de palier est formée par une couche de résine (113), et la surface périphérique intérieure de palier a une forme en saillie et en retrait comprenant une partie de contact en saillie (113a) destinée à être mise en contact avec l'arbre de rotation de cadre (AX), et une partie en retrait sans contact (113b) non destinée à être mise en contact avec l'arbre de rotation de cadre (AX) mais à former un jeu,
**caractérisé en ce que** la partie en retrait sans contact (113b) est formée de manière conique ou pyramidale vers la surface périphérique extérieure de palier.

2. Palier lisse (100A à 100E) selon la revendication 1, dans lequel la partie en retrait sans contact (113b) est formée en forme de pyramide quadrangulaire vers la surface périphérique extérieure de palier.

3. Palier lisse (100A à 100E) selon l'une quelconque des revendications 1 à 2, dans lequel la disposition de la partie de contact en saillie (113a) et de la partie en retrait sans contact (113b) de la surface périphérique intérieure de palier forme un motif de grille.

4. Palier lisse (100A à 100E) selon la revendication 3, dans lequel le motif de grille est formé par agencement de plusieurs formes en diamant ayant des lignes diagonales imaginaires qui sont orthogonales les unes aux autres, et l'une des lignes diagonales imaginaires qui sont orthogonales les unes aux autres des formes en diamant est dirigée dans la même direction que la direction de l'arbre de rotation (X) de l'arbre de rotation de cadre (AX).

5. Palier lisse (100A à 100E) selon l'une quelconque des revendications 1 à 4, dans lequel la
surface périphérique extérieure de palier est formée par une plaque métallique, et
dans lequel la couche de résine (113) est laminée sur la plaque métallique via une couche de bronze frittée avec laquelle une partie de la couche de résine (113) est imprégnée.

6. Cadre de siège (LK) d'un siège d'automobile (VS) comprenant un palier lisse (100A à 100E) selon l'une quelconque des revendications 1 à 5,
dans laquelle l'arbre de rotation de cadre (AX) est un arbre de rotation de cadre (AX) du siège de véhicule (VS) et
dans laquelle le cadre de siège (LK) du siège de véhicule (VS) et l'arbre de rotation de cadre (AX) sont supportés de manière rotative l'un par rapport à l'autre par ajustage et fixation de la partie latérale de surface périphérique extérieure de palier sur le cadre de siège (LK) du siège de véhicule (VS) et par ajustage et emmanchement à force de l'arbre de rotation de cadre (AX) dans une partie latérale de surface périphérique intérieure de palier
